# EUROPEAN PATENT APPLICATION

(11) **EP 3 483 189 A1**
(43) Date of publication of application: **15.05.2019**
(21) Application number: 17201669.3
(22) Date of filing: 14.11.2017
(51) Int. Cl.: C08F 2/01, B01J 19/00, C08F 10/00

(54) **AUTOMATED METHOD FOR TERMINATING AN OLEFIN POLYMERIZATION REACTION UNDER EMERGENCY CONDITIONS**

(71) Applicant: Borealis AG, 1220 Vienna (AT)
(72) Inventor: NYFORS, Klaus, 06100 Porvoo (FI); KOKKO, Tapio, 06450 Porvoo (FI); KILPI, Juha, 01350 Vantaa (FI); LINDHOLM, Jan, 04130 Sipoo (FI)
(74) Representative: Kador & Partner PartG mbB

(57) **Abstract**

The present invention relates to a method for terminating an olefin polymerization reaction conducted in the presence of an olefin polymerization catalyst in a polymerization reactor under emergency conditions by automatically introducing a killing agent into the polymerization reactor the stop the polymerization reaction at a monitored increase of the polymerization temperature and/or pressure and automatically stopping the polymerization reaction at a monitored pressure drop in the vessel containing the killing agent. This method will feed the CO into the reactor independently of manual interaction e.g changing of empty CO bottles .

## Description

The present application relates to a method for terminating an olefin polymerization reaction by introducing a killing agent into the polymerization reactor.

### Background

Alpha-olefin polymers such as e.g. polyethylenes or polypropylenes are polymerized in low pressure processes in the presence of alpha-olefin polymerization catalysts such as Ziegler-Natta catalysts or metallocene catalysts, optionally in the presence of chain transfer agents such as hydrogen. The polymerization reaction generally is exothermic so that the polymerization temperature has to be controlled.

In normal operation, one way of controlling the temperature is by passing the fluid stream recycled back into the polymerization reactor through circulator, e.g. a compressor, and then through a heat exchanger wherein the fluid stream is cooled to remove the heat of the reaction before it is returned into the polymerization reactor. Additionally, the specific polymerization reactors such as loop reactors can also contain cooling means such as cooling jackets situated around the polymerization pipe of the loop reactor.

If either the circulator or the cooling means such as the heat exchanger or the cooling jackets fails due to e.g. electrical or mechanical failure or loss of cooling medium, the cooling means for controlling the polymerization temperature becomes inoperative. As a consequence the exothermic heat of the polymerization reaction causes an increase of the temperature which additionally results in an increase of the pressure in the reactor assembly in a run-away fashion.

In the worst case scenario the increased temperature causes pressure to rise to the design limit of the pressure vessel, leading to Loss of Containment.

Several techniques are known in the art for terminating the olefin polymerization reaction in short time such as by injecting a killing gas such as carbon monoxide into the polymerization reactor as e.g. disclosed in EP 0 553 809 A1. However, these techniques include manual operations such as manually connecting the killing gas bottles with the polymerization reactor or manually opening the valves for introducing the killing gas into the polymerization reactor.

In runaway reactions, the risk is so high it needs to be reduced by many independent layers of protection. One of the layers can be a catalyst kill system, suitably using carbon monoxide as killing agent, but then it must be executed automatically (safety instrumented function).

Thus, there is a need in the art for an automated method for terminating an olefin polymerization reaction conducted in the presence of an olefin polymerization catalyst in a polymerization reactor under emergency conditions.

### Summary of the invention

The present invention relates to a method for terminating an olefin polymerization reaction conducted in the presence of an olefin polymerization catalyst in a polymerization reactor under emergency conditions, comprising the steps of:
i. Providing a polymerization reactor assembly comprising a polymerization reactor, a vessel containing a killing agent and a killing agent feed line connecting the vessel containing a killing agent with the polymerization reactor;
ii. Polymerizing olefin monomers in the presence of an olefin polymerization catalyst in the polymerization reactor;
iii. Continuously monitoring the temperature and/or the pressure in the polymerization reactor;
iv. Introducing the killing agent into the polymerization reactor in an amount sufficient to terminate the polymerization reaction at an increase of the temperature in the polymerization reactor to at least 102.5 % of the polymerization temperature, measured in °C, and/or an increase of the pressure in the polymerization reactor to at least 105.0 % of the polymerization pressure, measured in bar;
v. Continuously monitoring the pressure in the vessel containing the kill agent; and
vi. Shutting down the polymerization process in the polymerization reactor when the pressure in the vessel containing the kill agent drops to 90 % or less of its maximum pressure, measured in bar.

The method of the present invention is a fully automated method without any manual operation which allows a short term shut down of the polymerization process in any kind of emergency condition. The inventive method thus meets SIL 1 conditions.

Further, the present invention relates to a reactor assembly comprising:
(a) a polymerization reactor;
(b) means for monitoring the temperature and/or the pressure in the polymerization reactor;
(c) a vessel containing a killing agent;
(d) a killing agent feed line connecting the vessel containing a killing agent and the polymerization reactor;
(e) means for introducing the killing agent into the polymerization reactor in an amount sufficient to terminate the polymerization reaction at an increase of the temperature in the polymerization reactor to at least 102.5 % of the polymerization temperature, measured in °C, and/or an increase of the pressure in the polymerization reactor to at least 105.0 % of the polymerization pressure, measured in bar;
(f) means for monitoring the pressure in the vessel containing the kill agent;
(g) means for shutting down the polymerization process in the polymerization reactor when the pressure in the vessel containing the kill agent drops to 90 % or less of its maximum pressure, measured in bar.

Additionally, the present invention relates to the use of the method for terminating an olefin polymerization reaction conducted in the presence of an olefin polymerization catalyst in a polymerization reactor under emergency conditions as defined herein for increasing safety standards of an olefin polymerization process to meet the requirements of SIL 1, defined according to IEC 61508.

Still further, the present invention relates to the use of the means for shutting down the polymerization process in the polymerization reactor of the reactor assembly of the invention for automatically shutting down the polymerization process when the pressure in the vessel containing the kill agent drops to 90 % or less of its maximum pressure, measured in bar.

### Detailed Description

### Polymerization

The monomers polymerized in the polymerization process are typically alpha-olefins having from 2 to 12 carbon atoms, preferably from 2 to 10 carbon atoms. Preferably, the olefins are ethylene or propylene, optionally together with one or more other alpha-olefins having from 2 to 8 carbon atoms. Especially preferably the polymerization process is used for polymerizing ethylene, optionally with one or more comonomers selected from alpha-olefins having from 4 to 8 carbon atoms; or propylene, optionally together with one or more comonomers selected from ethylene and alpha-olefins having from 4 to 8 carbon atoms.

The monomers are preferably polymerized in the presence of a chain-transfer agent such as hydrogen.

Thus, the polymeric material is preferably selected from alpha-olefin homo- or copolymers having alpha-olefin monomer units of from 2 to 12 carbon atoms, preferably from 2 to 10 carbon atoms. Preferred are ethylene or propylene homo- or copolymers. The comonomer units of ethylene copolymers are preferably selected from one or more comonomers selected from alpha-olefins having from 4 to 8 carbon atoms. The comonomer units of propylene copolymers are preferably selected from one or more comonomers selected from ethylene and alpha-olefins having from 4 to 8 carbon atoms.

### Polymerization catalyst

The polymerization in the polymerization reactor is conducted in the presence of an olefin polymerization catalyst. The catalyst may be any catalyst which is capable of producing the desired olefin polymer. Suitable catalysts are, among others, Ziegler - Natta catalysts based on a transition metal, such as titanium, zirconium and/or vanadium catalysts. Especially Ziegler - Natta catalysts are useful as they can produce olefin polymers within a wide range of molecular weight with a high productivity.

Suitable Ziegler - Natta catalysts preferably contain a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 µm. However, it has turned out that special advantages can be obtained if the support has median particle size from 6 to 90 µm.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

Another group of suitable Ziegler - Natta catalysts contain a titanium compound together with a magnesium halide compound acting as a support. Thus, the catalyst contains a titanium compound on a magnesium dihalide, like magnesium dichloride. Such catalysts are disclosed, for instance, in WO-A-2005/118655 and EP-A-810235.

Still a further type of Ziegler-Natta catalysts are catalysts prepared by a method, wherein an emulsion is formed, wherein the active components form a dispersed, i.e. a discontinuous phase in the emulsion of at least two liquid phases. The dispersed phase, in the form of droplets, is solidified from the emulsion, wherein catalyst in the form of solid particles is formed. The principles of preparation of these types of catalysts are given in WO-A-2003/106510 of Borealis.

The Ziegler - Natta catalyst is used together with an activator. Suitable activators are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Furthermore they include alkylaluminium oxy-compounds, such as methylaluminiumoxane (MAO), hexaisobutylaluminiumoxane (HIBAO) and tetraisobutylaluminiumoxane (TIBAO). Also other aluminium alkyl compounds, such as isoprenylaluminium, may be used. Especially preferred activators are trialkylaluminiums, of which triethylaluminium, trimethylaluminium and tri-isobutylaluminium are particularly used. If needed the activator may also include an external electron donor. Suitable electron donor compounds are disclosed in WO-A-95/32994, US-A-4107414, US-A-4186107, US-A-4226963, US-A-4347160, US-A-4382019, US-A-4435550, US-A-4465782, US 4472524, US-A-4473660, US-A-4522930, US-A-4530912, US-A-4532313, US-A-4560671 and US-A-4657882. Also electron donors consisting of organosilane compounds, containing Si-OCOR, Si-OR, and/or Si-NR₂ bonds, having silicon as the central atom, and R is an alkyl, alkenyl, aryl, arylalkyl or cycloalkyl with 1-20 carbon atoms are known in the art. Such compounds are described in US-A-4472524, US-A-4522930, US-A-4560671, US-A-4581342, US-A-4657882, EP-A-45976, EP-A-45977 and EP-A-1538167.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

Also metallocene catalysts may be used. Metallocene catalysts comprise a transition metal compound which contains a cyclopentadienyl, indenyl or fluorenyl ligand. Preferably the catalyst contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

### Polymerization reactors

The polymerization may be conducted in any method that is known in the art, such as in slurry, solution or gas phase.

In some cases it is preferred that the polymerization stage is preceded by a prepolymerization stage. In prepolymerization a small amount of an olefin, preferably from 0.1 to 500 grams of olefin per one gram catalyst is polymerized. Usually the prepolymerization takes place at a lower temperature and/or lower monomer concentration than the actual polymerization. Typically, the prepolymerization is conducted as a continuous process at a temperature within the range of from 0 to 70 °C, preferably from 10 to 60 °C. Usually, but not necessarily, the monomer used in the prepolymerization is the same that is used in the subsequent polymerization stage(s). It is also possible to feed more than one monomer into the prepolymerization stage. Description of prepolymerization can be found in e.g. WO-A-96/18662, WO-A-03/037941, GB-A-1532332, EP-A-517183, EP-A-560312 and EP-A-99774.

It is within the scope of the invention to conduct the polymerization in at least one polymerization stage. It is also known in the art to polymerize in at least two polymerization stages to produce bimodal polyolefins, such as bimodal polyethylene and bimodal polypropylene, as disclosed in WO-A-92/12182, EP-A-22376, EP-A-713888 and WO-A-98/58975. Further, multistage polymerization may be used to produce heterophasic propylene copolymers, as disclosed in WO-A-98/58976. It is to be understood that the present invention is not limited to any specific number of polymerization stages, but any number is possible.

If the polymerization is conducted as a slurry polymerization, any suitable reactor type known in the art may be used. A continuous stirred tank reactor and a loop reactor are suitable examples of useful reactor types. Especially, a loop reactor is preferred because of its flexibility.

A loop reactor is a closed pipe completely filled with slurry in which the slurry is circulated with a high velocity along the pipe by using a circulation pump. Loop reactors are well known in the art and examples are given, for instance, in US-A-4582816, US-A-3405109, US-A-3324093, EP-A-479186 and US-A-5391654. In loop reactor usually substantially vertical sections alternate with substantially horizontal sections which are connected by curved sections. The substantially vertical and horizontal sections are also known as substantially vertical and horizontal legs and the curved sections are also known as elbows. The substantially vertical sections can comprise cooling means such as such as cooling jackets situated around the pipe of the substantially vertical section. Thus, the substantially vertical section containing cooling means are also known as cooling sections or cooling legs. "Substantially vertical" and "substantially horizontal" means that the pipe of said section can either be straight or slightly curved.

The slurry polymerization may be conducted in normal liquid slurry conditions or alternatively so that the temperature and the pressure within the reactor exceed the critical temperature and pressure of the fluid mixture within the reactor. Such a polymerization method is called supercritical slurry polymerization. Description of liquid slurry polymerization is given, among others, in EP-A-249689 and US-A-3262922 and supercritical slurry polymerization in WO-A-92/12181 and US-A-3294772.

The slurry may be withdrawn from the reactor in any method known in the art, including continuous and intermittent withdrawal. If the withdrawal is intermittent, it may be realized by using so called settling legs, where the slurry is allowed to settle before discharging the settled slurry from the reactor. Settling legs are generally known in the art and they are described, for instance, in US-A-4613484 and US-A-4121029.

If the slurry is withdrawn continuously from the reactor, then it may be withdrawn without a concentration step or it may be concentrated either before or after the withdrawal. For economic reasons it is preferred to concentrate the slurry. Suitable methods of concentration are, among others, hydrocyclone or sieve. Typically in such a method the slurry is withdrawn continuously from the reactor and passed through a concentration device, such as hydrocyclone or sieve. The bottom flow is directed to product withdrawal whereas the overflow is recycled to the polymerization reactor. Such methods are disclosed, for instance, in EP-A-1415999.

If the polymerization is conducted as a gas-phase polymerization, any suitable reactor type known in the art may be used. Suitable reactors are e.g. continuous-stirred tank reactors or fluidized bed reactors. Both types of gas-solids olefin polymerization reactors are well known in the art.

Preferably the gas-phase polymerization reactor is a fluidized bed reactor.

In a fluidized bed reactor the polymerization takes place in a fluidized bed formed by the growing polymer particles in an upwards moving gas stream. In the fluidized bed the polymer particles, containing the active catalyst, come into contact with the reaction gases, such as monomer, comonomer(s) and hydrogen which cause polymer to be produced onto the particles.

Thereby, the fluidized bed reactor can comprise a distribution plate which is situated below the fluidized bed. In such a fluidized bed reactor the feed pipe is usually connected to the fluidized bed reactor above the distribution plate at a position higher than 1/8, preferably at a position higher than 1/6, most preferably at a position higher than 1/3 of the effective diameter of the distribution plate measured from the distribution plate in vertical direction. Such a fluidized bed reactor with a distribution plate is described in EP-A-2 594 333.

In a preferred embodiment the fluidized bed reactor does not comprise a distribution plate. The polymerization takes place in a reactor including a bottom zone, a middle zone and a top zone. The bottom zone forms the lower part of the reactor in which the base of the fluidized bed is formed. The base of the bed forms in the bottom zone with no fluidization grid, or gas distribution plate, being present. Above the bottom zone and in direct contact with it is the middle zone. The middle zone and the upper part of the bottom zone contain the fluidized bed. Because there is no fluidization grid there is a free exchange of gas and particles between the different regions within the bottom zone and between the bottom zone and the middle zone. Finally, above the middle zone and in direct contact therewith is the top zone.

The upwards moving gas stream is established by withdrawing a fluidization gas stream from the top zone of the reactor, typically at the highest location. The gas stream withdrawn from the reactor is then compressed and cooled and re-introduced to the bottom zone of the reactor. Preferably, the gas is filtered before being passed to the compressor. Additional monomer, eventual comonomer(s), hydrogen and inert gas are suitably introduced into the circulation gas line. It is preferred to analyse the composition of the circulation gas, for instance, by using on-line gas chromatography and adjust the addition of the gas components so that their contents are maintained at desired levels.

The circulation gas line preferably comprises at least one cyclone. The cyclone has the objective of removing the entrained polymer from the circulation gas. The polymer stream recovered from the cyclone can be directed to another polymerization stage, or it may be returned into the fluidized bed reactor or it may be withdrawn as the polymer product.

The bottom zone of the reactor has a generally conical shape tapering downwards. Because of the shape of the zone, the gas velocity gradually decreases along the height within said bottom zone. The gas velocity in the lowest part is greater than the transport velocity and the particles eventually contained in the gas are transported upwards with the gas. At a certain height within the bottom zone the gas velocity becomes smaller than the transport velocity and a fluidized bed starts to form. When the gas velocity becomes still smaller the bed becomes denser and the polymer particles distribute the gas over the whole cross-section of the bed. Such a fluidized bed reactor without distribution plate is described in EP-A-2 495 037 and EP-A-2 495 038.

### Method for Terminating the Olefin Polymerization Reaction

The reactor assembly comprises a polymerization reactor as described above, a vessel containing a killing agent and a killing agent feed line connecting the vessel containing a killing agent with the polymerization reactor.

The vessel containing a killing agent is permanently connected to the polymerization reactor through the killing agent feed line.

Additionally the reactor assembly can comprise means for cooling the polymerization fluid and means for conveying the polymerization fluid. When the polymerization reactor is a loop reactor, the killing agent feed line is preferably connected with at least one of the substantially vertical legs of the loop reactor, preferably more than one of the substantially vertical legs of the loop reactor and most preferably all substantially vertical legs of the loop reactor. As a consequence the killing agent is preferably introduced into at least one of the substantially vertical legs of the loop reactor, preferably more than one of the substantially vertical legs of the loop reactor and most preferably all substantially vertical legs of the loop reactor.

Additionally, the killing agent feed line can be connected to the main feed line of the loop reactor. As a consequence the killing agent can also be introduced into the main feed line of the loop reactor.

When the polymerization reactor is a fluidized bed reactor, the killing agent feed line is preferably connected directly with the fluidized bed reactor at different heights. Consequently, the killing agent is preferably directly introduced into the fluidized bed at different heights into and/or below the fluidized bed.

Alternatively, the killing agent feed line is preferably connected with the circulation gas system of the fluidized bed reactor. As a consequence the killing agent is preferably introduced into the circulation gas system of the fluidized bed reactor.

As killing agent any substance is suitable which terminates the polymerization reaction by inactivating the polymerization catalyst. Preferably the killing agent is selected from the group of carbon monoxide, carbon dioxide, ammonia, water, isopropanol or mixtures thereof. Especially preferred are carbon monoxide and carbon dioxide. Mostly preferred is carbon monoxide.

The killing agent is introduced into the polymerization reactor through the killing agent feed line, preferably by opening one or more automatic valve(s). The automatic valve(s) is/are preferably situated in the killing agent feed line. The automatic valve(s) open(s) at a predetermined case of emergency such as a temperature drop in the reactor, a pressure drop in the reactor, a breakdown of the means of cooling the polymerization fluid or a breakdown of the means for conveying the polymerization fluid.

The reactor assembly thus comprises means for introducing the killing agent into the polymerization reactor which preferably is an automated valve situated in the killing agent feed line.

For the case that the breakdown is caused by an electric breakdown of the whole polymerization plant the automatic valve is preferably connected to a battery operated back-up system which ensures electric supply to the automatic valve(s) even at complete electric shut down. Preferably, as additional safety measure the automatic valve(s) is/are equipped with a mechanical spring which mechanically opens the automatic valve(s) without need of electric energy.

The killing agent shall be introduced into the polymerization reactor automatically under emergency conditions, e.g. when the temperature and/or the pressure in the polymerization reactor increase beyond a predetermined threshold value.

For the temperature said threshold value is a temperature increase in the polymerization reactor of at least 102.5 % of the polymerization temperature, more preferably of at least 103.5 % of the polymerization temperature and most preferably of at least 105.0 % of the polymerization temperature. Thereby, the temperature is measured in °C.

For the pressure said threshold value is a pressure increase in the polymerization reactor of at least 105.0 % of the polymerization pressure, more preferably of at least 110.0 % of the polymerization pressure and most preferably of at least 115.0 % of the polymerization pressure. Thereby, the pressure is measured in bar.

For automatic introduction of the killing agent into the polymerization reactor at a temperature and/or pressure increase the temperature and/or the pressure in the polymerization reactor is continuously monitored.

Preferably, the killing agent is also introduced into the polymerization reactor in an amount sufficient to terminate the polymerization reaction at a breakdown of the means for cooling the polymerization fluid and/or of the means for conveying the polymerization fluid.

The means of cooling the polymerization fluid preferably is a heat exchanger situated downstream of the polymerization reactor in which the polymerization fluid which is withdrawn from the polymerization reactor is cooled before redirected into the polymerization reactor. Other means of cooling which may be continuously monitored during the polymerization process may be cooling means directly situated at the polymerization reactor such as the above described cooling jackets of loop reactors.

The means for cooling the polymerization fluid are generally used and known in the art.

The means for conveying the polymerization fluid can either be situated within the polymerization reactor or downstream of the polymerization reactor, depending on the nature of the reactor.

A loop reactor usually comprises a means for conveying such as a pump for conveying the polymerization fluid through the pipe of the loop reactor.

Other means for conveying the polymerization fluid may be pumps or cyclones situated downstream of the polymerization reactor with which the polymerization fluid is conveyed and redirected into the polymerization reactor.

The means for conveying the polymerization fluid are generally used and known in the art.

For automatic introduction of the killing agent into the polymerization reactor at a breakdown of the means for cooling the polymerization fluid and/or of the means for conveying the polymerization fluid preferably the means for cooling and/or the means for conveying are continuously monitored.

Means for continuously monitoring e.g. temperature, pressure, flow or electric current which are suitable in the method of the invention are commonly used and well known in the art.

As an additional safety measure the pressure in the vessel containing the killing agent is continuously monitored. In the case of a pressure drop in the vessel containing the killing agent the polymerization process in the polymerization reactor is shut down. The reason for this measure is to ensure that when the amount of killing agent in the vessel decreases to an amount too low to terminate the polymerization reaction the polymerization reaction is shut down. The vessel containing the killing agent is preferably connected to one or more killing agent storage vessels so that during the polymerization process the vessel containing the killing agent is preferably constantly filled up with killing agent. After shut down of the polymerization process the empty killing agent storage vessels are again filled up with killing agent before the polymerization process can be restarted.

The threshold of the pressure drop in the vessel containing the killing agent is a pressure drop to 90 % or less of the maximum pressure in the vessel, preferably 75 % or less of the maximum pressure in the vessel, more preferably 60 % or less of the maximum pressure in the vessel, still more preferably 50 % or less of the maximum pressure in the vessel and most preferably 40 % or less of the maximum pressure in the vessel. Thereby, the pressure is measured in bar.

The polymerization process is preferably shut down by stopping the olefin polymerization catalyst feed into the polymerization reactor. Thereby, it is preferred that the feed line for the stream containing the olefin polymerization catalyst into the polymerization reactor is closed by means of closing an automatic valve which is preferably situated in said feed line.

The reactor assembly thus preferably comprises means for stopping the olefin polymerization catalyst feed into the polymerization reactor such as an automatic valve which is preferably situated in the feed line for the stream containing the olefin polymerization catalyst into the polymerization reactor.

### Benefits of the invention

With the method of the present invention an automated method for terminating an olefin polymerization reaction under emergency conditions is provided which does not depend on any further manual operation.

The method of the present invention thereby automatically terminates the polymerization reaction by deactivating the polymerization catalyst in any case that the exothermic polymerization reaction threatens to run away by uncontrolled temperature and/or pressure increase in the polymerization process which may lead to leaks and as worst case scenario to Loss of Containment.

Additionally, the availability of killing agent for deactivating the catalyst is monitored and the polymerization process is automatically shut down when a low amount of killing agent is detected which is insufficient to fully terminate the polymerization reaction.

With the automated method of the present invention manual operations are avoided and errors are minimized increasing the safety of the plant and its people.

The above described method for increasing safety standards of the olefin polymerization process to meet the requirements of SIL 1, defined according to IEC 61508.

### Figures

Fig. 1 shows an embodiment of the state of the art manual system for terminating an olefin polymerization reaction conducted in the presence of an olefin polymerization catalyst under emergency conditions in a loop reactor using CO gas as killing agent.
Fig. 2 shows an embodiment of the automated system for terminating an olefin polymerization reaction conducted in the presence of an olefin polymerization catalyst according to the present invention under emergency conditions in a loop reactor using CO gas as killing agent.

### Reference signs

- 1: Loop Reactor
- 2: CO Bottles
- 3: Manual Valves
- 4: Automatic Valve
- 5: Automatic Valve
- 6: Automatic Valve
- 7: CO Gas Feed Line
- 8: CO vessel
- 9: Low Pressure Alarm and Interlock Signal
- 10: Main Feed Line
- 11: Flare Line
- 12: Dump Tank Line

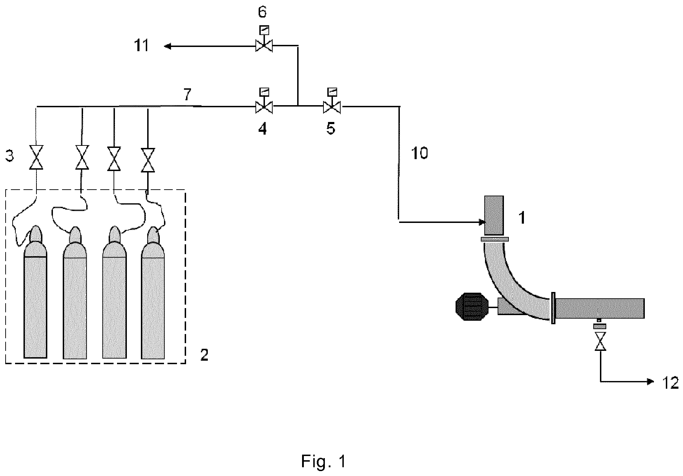

Fig. 1 shows an embodiment of a state of the art manual system for terminating an olefin polymerization reaction conducted in the presence of an olefin polymerization catalyst under emergency conditions in a loop reactor (1) using CO gas as killing agent. The CO gas is contained in CO bottles (2) which are connected to the main feed line (10) of the loop reactor (1) through the CO gas feed line (7). This system includes sensors for continuously measuring the temperature, pressure and flow in the loop reactor, the heat exchangers and pumps of the loop reactor assembly (not shown). These sensors are connected to automatic valve (5) which automatically opens the CO gas feed line (4) when the temperature or pressure increases over a predetermined threshold value or in case of an electric breakdown.

The CO gas feed line (7) contains a series of valves (4-6) which are automatically opened in case of emergency for introducing the CO gas into the loop reactor (1). Exhaust CO gas can be removed from the CO gas feed line (7) via flare feed line (11) and flared. Under normal operation conditions automatic valves (4) and (6) are in open position and automatic valve (5) is in closed position so that any CO gas in the CO gas feed line (7) is not introduced into the reactor (1) but removed via flare feed line (11). Under emergency conditions automatic valve (5) automatically switches to open position and automatic valve (6) automatically switches to closed position so that the CO gas is introduced into one or more cooling legs (only one shown in the figure) of the loop reactor (1).. As additional safety measure the loop reactor assembly is equipped with a dump tank which is connected to the loop reactor with a dump tank line (12) through which polymerization fluid is withdrawn from the reactor into a dump tank.

The method of the state of the art requires that full CO bottles are connected to the CO system, and this requires manual operation by connecting the CO bottles (2) with the CO gas feed line (7) via manual valves (3); making it more risky.

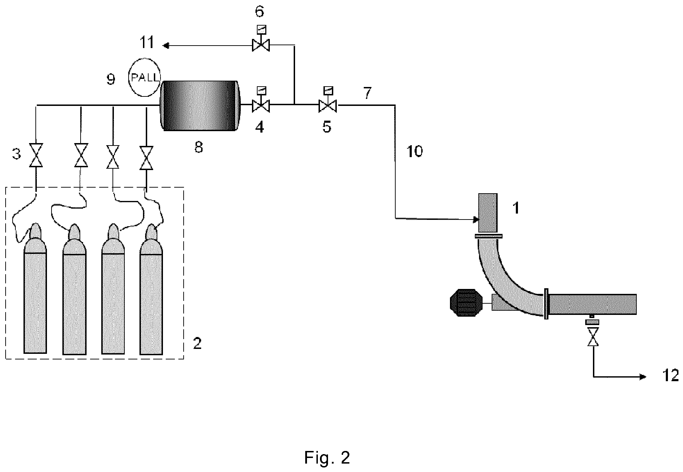

Fig. 2 shows an embodiment of the automated system for terminating an olefin polymerization reaction conducted in the presence of an olefin polymerization catalyst according to the present invention under emergency conditions in a loop reactor using CO gas as killing agent.

Compared to the system of Fig 1 the system of Fig 2 additionally includes a CO gas vessel (8) which is connected to the CO gas feed line (7) and is filled with CO gas from the CO gas bottles (2) through open manual valves (3). The system further includes a low pressure alarm and interlock signal (9) which continuously monitors the pressure in the CO gas vessel (8). At a pressure drop in the CO gas vessel (8) below a predetermined threshold value the catalyst feed line to the loop reactor (1) is closed by means of an automatic valve (not shown) which ensures that the catalyst feed into the loop reactor (1) is stopped so that the polymerization process is shut down.

After shut down of the polymerization process the CO vessels (2) must be filled to full pressure in order to be able to start the process again.

## Claims

1. A method for terminating an olefin polymerization reaction conducted in the presence of an olefin polymerization catalyst in a polymerization reactor under emergency conditions, comprising the steps of:
i. Providing a polymerization reactor assembly comprising a polymerization reactor, a vessel containing a killing agent and a killing agent feed line connecting the vessel containing a killing agent with the polymerization reactor;
ii. Polymerizing olefin monomers in the presence of an olefin polymerization catalyst in the polymerization reactor;
iii. Continuously monitoring the temperature and/or the pressure in the polymerization reactor;
iv. Introducing the killing agent into the polymerization reactor in an amount sufficient to terminate the polymerization reaction at an increase of the temperature in the polymerization reactor to at least 102.5 % of the polymerization temperature, measured in °C, and/or an increase of the pressure in the polymerization reactor to at least 105.0 % of the polymerization pressure, measured in bar;
v. Continuously monitoring the pressure in the vessel containing the kill agent; and
vi. Shutting down the polymerization process in the polymerization reactor when the pressure in the vessel containing the kill agent drops to 90 % or less of its maximum pressure, measured in bar.

2. The method of claim 1 wherein the polymerization reactor assembly further comprises means for cooling the polymerization fluid and means for conveying the polymerization fluid and the method further comprises the step of introducing the killing agent into the polymerization reactor in an amount sufficient to terminate the polymerization reaction at a breakdown of the means for cooling the polymerization fluid and/or the means for conveying the polymerization fluid.

3. The method of claims 1 or 2, wherein the killing agent is introduced into the polymerization reactor by opening one or more automatic valve(s) which is/are situated at the killing agent feed line.

4. The method according to any of the preceding claims, wherein in step vi. the polymerization process is shut down by stopping the olefin polymerization catalyst feed into the polymerization reactor.

5. The method according to any of the preceding claims, wherein the killing agent is selected from carbon monoxide, carbon dioxide, or mixtures thereof, most preferably carbon monoxide.

6. The method according to any of the preceding claims, wherein the olefin monomers are selected from alpha-olefin monomers having from 2 to 12 carbon atoms and mixtures thereof.

7. The method according to any of the preceding claims, wherein the polymerization reactor is a loop reactor.

8. The method according to claim 7, wherein the killing agent is introduced into one or more of the substantially vertical legs of the loop reactor.

9. The method according to any of claims 1 to 6, wherein the polymerization reactor is a fluidized bed reactor.

10. The method according to claim 9, wherein the killing agent is introduced into the circulation gas system or directly into fluidized bed reactor at different heights into and/or below the fluidized bed.

11. An olefin polymerization reactor assembly comprising:
(a) a polymerization reactor;
(b) means for monitoring the temperature and/or the pressure in the polymerization reactor;
(c) a vessel containing a killing agent;
(d) a killing agent feed line connecting the vessel containing a killing agent and the polymerization reactor;
(e) means for introducing the killing agent into the polymerization reactor in an amount sufficient to terminate the polymerization reaction at an increase of the temperature in the polymerization reactor to at least 102.5 % of the polymerization temperature, measured in °C, and/or an increase of the pressure in the polymerization reactor to at least 105.0 % of the polymerization pressure, measured in bar;
(f) means for monitoring the pressure in the vessel containing the kill agent;
(g) means for shutting down the polymerization process in the polymerization reactor when the pressure in the vessel containing the kill agent drops to 90 % or less of its maximum pressure, measured in bar.

12. The reactor assembly according to claim 11, wherein the means for introducing the killing agent into the polymerization reactor include one or more automatic valve(s) situated in the killing agent feed line.

13. The reactor assembly according to claims 11 or 12, wherein the means for shutting down the polymerization process in the polymerization reactor include means for stopping the olefin polymerization catalyst feed into the polymerization reactor.

14. The reactor assembly according to any of claims 11 to 13, wherein the polymerization reactor is a loop reactor or a fluidized bed reactor.

15. Use of the method for terminating an olefin polymerization reaction conducted in the presence of an olefin polymerization catalyst in a polymerization reactor under emergency conditions according to any of the claims 1 to 10 for increasing safety standards of the olefin polymerization process to meet the requirements of SIL 1, defined according to IEC 61508.

16. Use of the means for shutting down the polymerization process in the polymerization reactor of the reactor assembly according to any of the claims 11 to 14 for automatically shutting down the polymerization process when the pressure in the vessel containing the kill agent drops to 90 % or less of its maximum pressure, measured in bar.
